# EUROPÄISCHE PATENTSCHRIFT

(11) **EP 4 141 399 B1**
(45) Veröffentlichungstag und Bekanntmachung des Hinweises auf die Patenterteilung: **02.10.2024**
(21) Anmeldenummer: 21193458.3
(22) Anmeldetag: 27.08.2021
(51) Int. Cl.: G01L 3/10

(54) **SPULENANORDNUNG UND DREHMOMENTSENSOR MIT SPULENANORDNUNG**
COIL ASSEMBLY AND TORQUE SENSOR WITH COIL ASSEMBLY
AGENCEMENT DE BOBINE ET CAPTEUR DE COUPLE POURVU D'AGENCEMENT DE BOBINE

(43) Veröffentlichungstag der Anmeldung: 01.03.2023
(73) Patentinhaber: NCTE AG, 82041 Oberhaching (DE)
(72) Erfinder: Mutz, Robert, 82031 Grünwald (DE); Mayr, Bernhard, 81549 München (DE)
(74) Vertreter: Grünecker Patent- und Rechtsanwälte PartG mbB

(56) Entgegenhaltungen:
- US-A1- 2004 050 181
- US-A1- 2011 308 330
- US-A1- 2012 185 207

## Beschreibung

### Gebiet der Erfindung

Die Erfindung betrifft eine Spulenanordnung und einen Drehmomentsensor mit einer Spulenanordnung.

### Stand der Technik

Es sind Drehmomentsensoren bekannt, die auf dem Prinzip des inversen magnetostriktiven Effekts beruhen, wie beispielsweise in EP 3 050 790 B1 offenbart. Dabei erzeugt eine magnetisierte Welle in Abhängigkeit von einem anliegenden Drehmoment ein entsprechendes Magnetfeld außerhalb der Welle, das kontaktlos mit einem Magnetfeldsensor erfasst werden kann. Insbesondere können dabei vorteilhaft zwei gegenläufig in Umfangrichtung magnetisierte Bereiche er Welle eingesetzt werden, was die Messgenauigkeit verbessert und eine Kompensation des Störeinflusses von externen Magnetfeldern ermöglicht, wobei jeweils eine Messspule in der Nähe eines jeweiligen magnetisierten Bereichs der Welle angeordnet ist. Mittels dieser Messspulen können beispielsweise durch Torsion der Welle erzeugte Magnetfelder in axialer Richtung der Welle erfasst werden.

Die Messung von Magnetfeldänderung durch ein Drehmoment kann dabei durch Messspulen in einer Messschaltung erfolgen, die durch das sich veränderte Magnetfeld beeinflusst werden. Diese werden berührungslos in Relation zur der magnetisierten Welle angebracht (z.B. parallel zur Drehachse) und erfassen Magnetfeldänderungen, die unter Last aufgrund der inversen Magnetostriktion auftreten. Die Magnetfeldänderung ist in der Regel direkt proportional zur äußeren Krafteinwirkung und stellt den Zusammenhang mit dem Drehmoment her. Dazu wird in der Herstellungsphase des Drehmomentsensors eine einmalige Kalibrierung durchgeführt.

Bei der Kalibrierung wird auch ein an der Messposition vorhandenes kontantes Restmagnetfeld von der magnetisierten Welle ohne anliegendes Moment durch Festsetzung der Nullstelle einer Magnetfeld-Drehmomentwert-Kurve berücksichtigt, so dass diesem Restmagnetfeld der Drehmomentwert Null zugeordnet wird.

Wie bereits erwähnt, können jedoch bei der Drehmomentmessung magnetische Störfelder auftreten, entweder dauerhaft oder nur zeitweise, die die Messung verfälschen. Beispielsweise kann das Erdmagnetfeld eine störende Magnetfeldquelle sein, sowohl konstant als auch variabel. In Falle eines Fahrzeugs mit einem derartigen Drehmomentsensor, kann eine variable Störung z.B. beim Vorbeifahren an Objekten, die das Erdmagnetfeld verändern, wie etwa stehende oder fahrende Fahrzeuge, erfolgen.

Diese aus dem Stand der Technik bekannte Spulenanordnung mit zwei längsweise benachbart angeordneten Spulen und zwei zugehörigen gegenläufig magnetisierten Bereichen weist jedoch die im Folgenden genannten Nachteile auf. Die Verschaltung von zwei gleichartigen Spulen zur Kompensation eines Fremdfeldes erfolgt so, dass bei Anlegen einer Messspannung der Messstrom in den Spulen in unterschiedliche Richtungen verläuft. Es müssen also beispielsweise die zueinander benachbarten Kontakte der beiden Spulen mit einem Pol der Messschaltung verbunden werden und die jeweiligen äußeren Kontakte mit dem anderen Pol der Messschaltung.

Die Kompensation funktioniert am besten, wenn das Fremdfeld in beiden Spulen möglichst gleichen Einfluss hat. Dabei ist dabei ein zentraler Faktor, dass die beiden Spulen, genau miteinander ausgerichtet sind und sich auf einer Geraden befinden.

Aufgrund der beschriebenen Verschaltung (insbesondere die Kontaktierung an den inneren Enden der beiden Spulen) ist es nur mit hohem Aufwand möglich, die beiden Spulen so exakt zueinander auszurichten, dass die Genauigkeit der Kompensation des Fremdfelds gewährleistet ist.

Das Dokument US 2011/308330 A1 beschreibt eine Spulenanordnung, wobei um ein Testobjekt zwei gegenläufig orientierte Sensorspulen angeordnet sind. Diese sind an den zueinander benachbarten Enden miteinander verbunden.

### Beschreibung der Erfindung

Der Erfindung liegt die Aufgabe zugrunde, die genannten Nachteile zumindest teilweise auszuräumen.

Diese Aufgabe wird durch eine erfindungsgemäße Spulenanordnung, insbesondere Messspulenanordnung zur Erfassung eines Magnetfelds gemäß Patentanspruch 1, gelöst.

Die erfindungsgemäße Spulenanordnung umfasst eine erste Zylinderspule mit einer ersten Windungsrichtung; eine zweite Zylinderspule mit einer zweiten Windungsrichtung; wobei die erste und die zweite Zylinderspule längsweise hintereinander auf einer gemeinsamen Achse ausgerichtet angeordnet sind; wobei zueinander benachbarte Enden der ersten und zweiten Zylinderspule elektrisch miteinander verbunden sind; und wobei die zweite Windungsrichtung gegenläufig zur ersten Windungsrichtung ist.

Dadurch, dass die Windungsrichtungen der beiden Zylinderspulen gegenläufig (entgegengesetzt zueinander, gespiegelt) sind, ist es nicht erforderlich, eine Kontaktierung in der Mitte zwischen den beiden Spulen vorzunehmen, sondern die inneren Enden der beiden Spulen sind direkt miteinander elektrisch leitend verbunden. Eine Messspannung braucht nur an die beiden äußeren, voneinander abgewandten, Enden angelegt werden. Der Effekt eines externen Magnetfelds wirkt sich aufgrund des unterschiedlichen Umlaufsinns der beiden Zylinderspulen entgegengesetzt aus und führt zur gewünschten Kompensation des magnetischen Fremdfelds.

Die erfindungsgemäße Spulenanordnung kann wie folgt weitergebildet werden.

Eine Weiterbildung besteht darin, dass weiterhin einen Stabilisierungskörper zur Stabilisierung der Ausrichtung der ersten und zweiten Zylinderspule zueinander auf der gemeinsamen Achse vorgesehen ist, wobei der Stabilisierungskörper vorzugsweise aus Kunststoffmaterial gefertigt ist, und wobei der Stabilisierungskörper vorzugsweise einen konstanten Querschnitt über dessen Länge aufweist.

Dies hat den Vorteil, dass Lage der beiden Zylinderspulen zueinander auf der gemeinsamen Achse (Geraden) fixiert werden kann. Kunststoffmaterial hat den Vorteil, keine magnetische Wirkung zu haben und die Messung nicht zu beeinflussen. Ein konstanter Querschnitt des Stabilisierungskörpers ist für die Zylinderspulen gut geeignet, wenn dieser im Innern der Spulen angeordnet wird.

In der erfindungsgemäßen Spulenanordnung ist die erste Zylinderspule mit einem ersten ferromagnetischen Spulenkern und die zweite Zylinderspule mit einem zweiten ferromagnetischen Spulenkern versehen, wobei der erste und der zweite Spulenkern längsweise hintereinander und mit einem Abstand zueinander auf der gemeinsamen Achse ausgerichtet angeordnet sind. Der erste Spulenkern befindet sich wenigstens teilweise innerhalb der ersten Zylinderspule und der zweite Spulenkern befindet sich wenigstens teilweise innerhalb der zweiten Zylinderspule.

Dies hat den Vorteil, dass die Wirkung von schwachen zu messenden Magnetfeldern verstärkt werden kann.

Gemäß einer anderen Weiterbildung können der erste ferromagnetische Spulenkern und der zweite ferromagnetische Spulenkern im Stabilisierungskörper eingebettet sein, wobei der Stabilisierungskörper vorzugsweise eine Längsnut aufweist, in welche der erste und der zweite ferromagnetische Spulenkern eingebettet sind, oder wobei der erste und der zweite ferromagnetische Spulenkern vorzugsweise vollständig vom Material des Stabilisierungskörpers umschlossen eingebettet sind.

Auf diese Weise kann durch den Stabilisierungskörper auch eine definierte Lage der Spulenkerne bewirkt werden.

Eine andere Weiterbildung besteht darin, dass der erste und der zweite ferromagnetische Spulenkern aus gleichem Material gefertigt und/oder gleich geformt sind.

Auf diese Weise kann eine gleichartige Verstärkungswirkung von beiden Spulenkernen erzielt werden, wobei dann auch die Kompensationswirkung verbessert wird, indem die einander entgegengesetzten Wirkungen eines Fremdmagnetfelds in beiden Zylinderspulen gleichartig verstärkt erfolgt.

Eine andere Weiterbildung besteht darin, dass eine erste Windungszahl der ersten Zylinderspule gleich einer zweiten Windungszahl der zweiten Zylinderspule ist; und/oder wobei ein erster Windungsdurchmesser der ersten Zylinderspule gleich einem zweiten Windungsdurchmesser der zweiten Zylinderspule ist; und/oder wobei eine erste Länge der ersten Zylinderspule gleich einer zweiten Länge der zweiten Zylinderspule ist und/oder wobei eine Induktivität der ersten Zylinderspule und eine Induktivität der zweiten Zylinderspule gleich ist.

Diese Maßnahmen verbessern weiterhin die Entsprechung des Einflusses der beiden Zylinderspulen auf die Messung.

Gemäß einer anderen Weiterbildung kann die erste Windungsrichtung rechtsläufig und die zweite Windungsrichtung linksläufig sein, oder die erste Windungsrichtung kann linksläufig und die zweite Windungsrichtung rechtsläufig sein.

Eine andere Weiterbildung besteht darin, dass die Spulenanordnung einen Spulenwickel aus einem Wickeldraht mit einem ersten Teilspulenwickel als erste Zylinderspule und einem zweiten Teilspulenwickel als zweite Zylinderspule umfassen kann, wobei der erste Teilspulenwickel die erste Windungsrichtung aufweist und der zweite Teilspulenwickel die zweite Windungsrichtung aufweist.

Auf diese Weise kann die Spulenanordnung durch Wickel eines Wickeldrahtes (z.B. Kupferlackdraht) ausgebildet werden. Dabei ändert sich lediglich die Wickelrichtung in einem Übergangsbereich zwischen dem ersten und dem zweiten Teilspulenwickel.

Dies kann dahingehend weitergebildet werden, dass der Spulenwickel auf dem Stabilisierungskörper als Wickelkörper zum Wickeln des Wickeldrahts aufgewickelt ist.

Der Wickelkörper kann Positionierungselemente zum Positionieren der Spulenanordnung aufweisen. Mit Hilfe der Positionierungselemente kann eine Länge des Spulenwickels bzw. eine Position des ersten und zweiten Teilspulenwickels definiert werden und/oder die Spulenanordnung kann damit in einem Messbereich befestigt / positioniert werden, beispielsweise auf einer Platine oder an einem Gehäuse einer Messvorrichtung.

Die Erfindung betrifft ebenfalls eine Messvorrichtung, die eine erfindungsgemäße Spulenanordnung oder eine deren Weiterbildungen, sowie ein Wechselspannungsmodul zur Erzeugung einer Wechselspannung umfasst; wobei an die Spulenanordnung eine Wechselspannung anlegbar ist, indem voneinander abgewandte Enden der ersten und zweiten Zylinderspule elektrisch mit dem Wechselspannungsmodul verbunden sind.

Die Messvorrichtung kann zur Erfassung eines Magnetfelds vorgesehen sein.

Dabei kann die Wechselspannung größer als 1 kHz sein, vorzugsweise im Bereich von 1 kHz bis 1 GHz, und höchst vorzugsweise im Bereich von 10 kHz bis 1 GHz liegen.

Diese Bereiche sind für die Erfassung eines magnetischen Messfeldes und die Kompensation eines magnetischen Fremdfeldes gut geeignet.

Die Erfindung betrifft weiterhin einen Drehmomentsensor, der Folgendes umfasst: eine magnetisierte Welle, eine magnetisierte Scheibe oder eine magnetisierte Speiche eines Speichenrads, an die ein Drehmoment anlegbar ist, wobei ein in Abhängigkeit vom anliegenden Drehmoment veränderliches Magnetfeld außerhalb der Welle, der Scheibe bzw. der Speiche erzeugbar ist; und eine erfindungsgemäße Messvorrichtung oder eine deren Weiterbildungen zur Erfassung des erzeugten Magnetfelds.

Die Erfindung stellt weiterhin eine Vorrichtung bereit, die einen erfindungsgemäßen Drehmomentsensor umfasst, wobei die Vorrichtung ein Fahrzeug, eine Robotikvorrichtung, ein Tretlager oder ein E-Bike sein kann.

Die oben genannte Aufgabe wird ebenfalls gelöst durch eine Verfahren zur Herstellung einer Spulenanordnung. Das Verfahren umfasst ein Bereitstellen einer ersten Zylinderspule mit einer ersten Windungsrichtung und einer zweiten Zylinderspule mit einer zweiten Windungsrichtung, die längsweise hintereinander auf einer gemeinsamen Achse ausgerichtet sind; wobei auf der gemeinsamen Achse zueinander benachbarte Enden der ersten und zweiten Zylinderspule elektrisch miteinander verbunden sind; und wobei die zweite Windungsrichtung gegenläufig zur ersten Windungsrichtung ist. Dabei umfasst das Bereitstellen der ersten und zweiten Zylinderspule entweder (i) ein Wickeln eines Wickeldrahts zur Herstellung eines Spulenwickels mit einem ersten Teilspulenwickel als die erste Zylinderspule und einem zweiten Teilspulenwickel als die zweite Zylinderspule, wobei der erste Teilspulenwickel mit einer ersten Windungsrichtung gewickelt wird und der zweite Teilspulenwickel mit einer zweiten Windungsrichtung gewickelt wird, wobei das Wickeln mit der zweite Windungsrichtung gegenläufig zum Wickeln mit der ersten Windungsrichtung erfolgt; oder (ii) Bereitstellen einer jeweils separaten ersten Zylinderspule mit der ersten Windungsrichtung und einer zweiten Zylinderspule mit der ersten Windungsrichtung; und elektrisches Verbinden von zueinander auf der gemeinsamen Achse benachbarten Enden der ersten und zweiten Zylinderspule, wobei die erste Zylinderspule mit einem ersten ferromagnetischen Spulenkern und die zweite Zylinderspule mit einem zweiten ferromagnetischen Spulenkern versehen werden, wobei der erste und der zweite Spulenkern längsweise hintereinander und mit einem Abstand zueinander auf der gemeinsamen Achse ausgerichtet angeordnet werden, und wobei sich der erste Spulenkern wenigstens teilweise innerhalb der ersten Zylinderspule und sich der zweite Spulenkern wenigstens teilweise innerhalb der zweiten Zylinderspule befindet.

Das erfindungsgemäße Verfahren kann dahingehend weitergebildet werden, dass ein Bereitstellen eines Stabilisierungskörpers zur Stabilisierung der Ausrichtung der ersten und zweiten Zylinderspule zueinander auf der gemeinsamen Achse, insbesondere auch als Wickelkörper zum Wickeln des Wickeldrahts für Alternative (i), vorgesehen ist.

Weiterhin kann für die Alternative (i) ein Einbetten eines ersten und eines zweiten Spulenkerns in den Stabilisierungskörper vorgesehen sein. Erfindungsgemäß befindet sich der erste Spulenkern wenigstens teilweise innerhalb des ersten Teilspulenwickels und der zweite Spulenkern wenigstens teilweise innerhalb des zweiten Teitsputenwickets.

Die Vorteile des erfindungsgemäßen Verfahrens oder dessen Weiterbildungen entsprechen jenen, die oben für die erfindungsgemäße Vorrichtung oder deren Weiterbildungen genannt wurden.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können Die Ansprüche geben den Gegenstand an, für den Schutz begehrt wird.

### Kurzbeschreibung der Zeichnungen

- Fig. 1: zeigt eine erste nicht beanspruchte Ausführungsform der Spulenanordnung.
- Fig. 2: zeigt eine zweite nicht beanspruchte Ausführungsform der Spulenanordnung.
- Fig. 3: zeigt eine Ausführungsform der erfindungsgemäßen Spulenanordnung.
- Fig. 4: zeigt eine Ausführungsform der erfindungsgemäßen Messvorrichtung und eine Ausführungsform des erfindungsgemäßen Drehmomentsensors.
- Fig. 5: zeigt eine weitere Ausführungsform eines erfindungsgemäßen Drehmomentsensors.
- Fig. 6: zeigt einen Wickelkörper zum Herstellen einer erfindungsgemäßen Spulenanordnung.

### Ausführungsformen

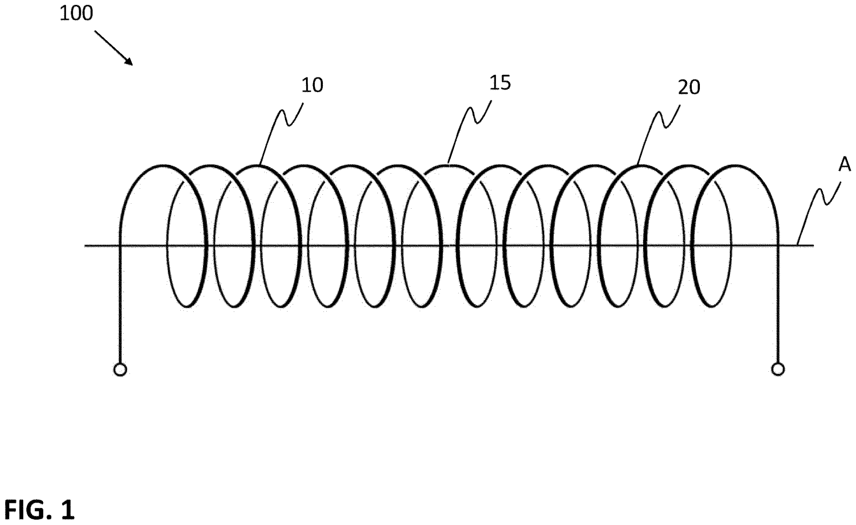

Figur 1 zeigt eine erste Ausführungsform 100 der Spulenanordnung.

Die Spulenanordnung 100 umfasst eine erste Zylinderspule 10 mit einer ersten Windungsrichtung (rechtsgängig); eine zweite Zylinderspule 20 mit einer zweiten Windungsrichtung (linksgängig); wobei die erste Zylinderspule 10 und die zweite Zylinderspule 20 längsweise hintereinander auf einer gemeinsamen Achse A ausgerichtet angeordnet sind; wobei zueinander benachbarte Enden 15 der ersten Zylinderspule 10 und zweiten Zylinderspule 20 elektrisch miteinander verbunden sind; und wobei die zweite Windungsrichtung (linksgängig) gegenläufig zur ersten Windungsrichtung (rechtsgängig) ist. Die Gangrichtung der ersten Zylinderspule 10 ist spiegelbildlich zur Gangrichtung der zweiten Zylinderspule 20.

Die erste Windungsrichtung kann rechtsläufig und die zweite Windungsrichtung linksläufig sein, oder die erste Windungsrichtung kann linksläufig und die zweite Windungsrichtung rechtsläufig sein.

An die äußeren Enden der Spulenanordnung 100 kann beispielsweise eine Messvorrichtung angeschlossen werden, die eine Messspannung bereitstellt, so dass die Spulenanordnung 100 Teil eines Schwingkreises ist, der durch im Spulenbereich vorhandene Magnetfelder beeinflusst wird.

Durch die unterschiedliche Gangrichtung der ersten Zylinderspule 10 und zweiten Zylinderspule 20 erübrigt sich eine Kontaktierung der Messvorrichtung an den mittleren Enden 15 der beiden Zylinderspulen 10, 20.

In dieser und den nachfolgend beschriebenen Ausführungsformen ist beispielsweise eine erste Windungszahl der ersten Zylinderspule 10 gleich einer zweiten Windungszahl der zweiten Zylinderspule 20; ein erster Windungsdurchmesser der ersten Zylinderspule 10 gleich einem zweiten Windungsdurchmesser der zweiten Zylinderspule 20; eine erste Länge der ersten Zylinderspule 10 gleich einer zweiten Länge der zweiten Zylinderspule 20. Eine oder mehrere (insbesondere alle) diese Maßnahmen verbessern weiterhin die Entsprechung des Einflusses der beiden Zylinderspulen auf die Messung. Zusätzlich oder alternativ kann eine Induktivität der ersten Zylinderspule 10 gleich einer Induktivität der zweiten Zylinderspule 20 sein.

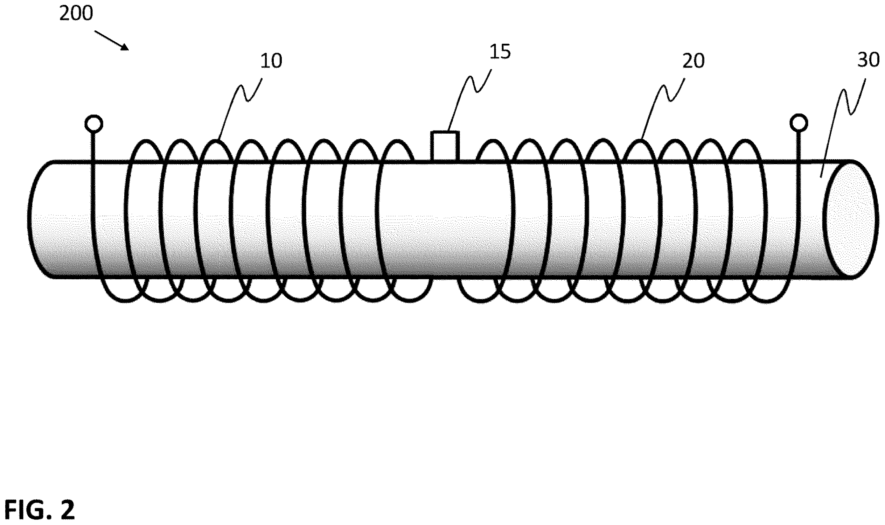

Figur 2 zeigt eine zweite Ausführungsform 200 der Spulenanordnung.

Die Spulenanordnung 200 dieser zweiten Ausführungsform entspricht jener der ersten Ausführungsform gemäß Figur 1, wobei weiterhin eine Stabilisierungskörper 30 zur Stabilisierung der Ausrichtung der ersten und zweiten Zylinderspule 10, 20 zueinander auf der gemeinsamen Achse A vorgesehen ist. Der Stabilisierungskörper 30 ist beispielsweise aus Kunststoffmaterial gefertigt. Der Stabilisierungskörper 30 hat vorzugsweise einen konstanten Querschnitt über dessen Länge. Der Stabilisierungskörper 30 kontaktiert die erste Zylinderspule 10 und die zweite Zylinderspule 20 und ist in der Zeichnung lediglich zur Veranschaulichung der Anordnung mit einem Abstand dargestellt.

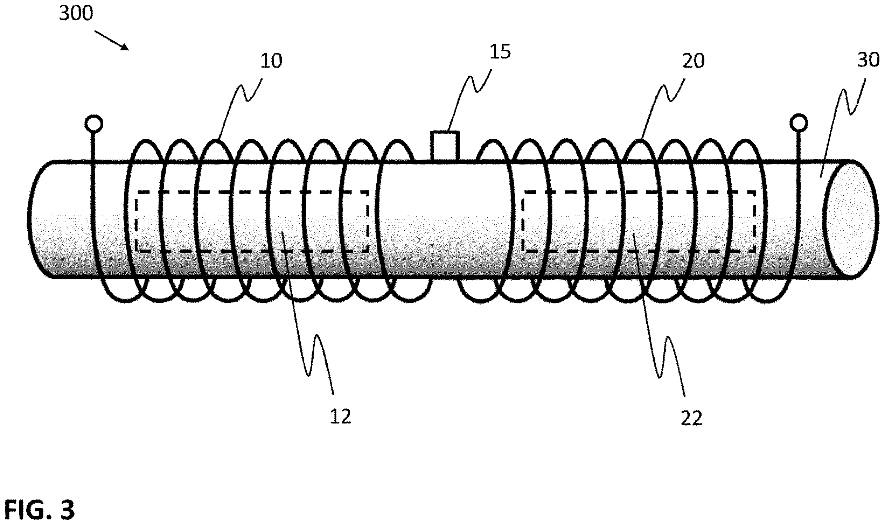

Figur 3 zeigt eine Ausführungsform 300 der erfindungsgemäßen Spulenanordnung.

Die Spulenanordnung 300 dieser Ausführungsform entspricht jener der zweiten Ausführungsform gemäß Figur 2, wobei die erste Zylinderspule 10 mit einem ersten ferromagnetischen Spulenkern 12 und die zweite Zylinderspule 20 mit einem zweiten ferromagnetischen Spulenkern 22 versehen sind, wobei der erste Spulenkern 12 und der zweite Spulenkern 22 längsweise hintereinander und mit einem Abstand zueinander auf der gemeinsamen Achse (siehe auch Figur 1) ausgerichtet angeordnet sind.

Die Spulenkerne 12, 22 umfassen vorzugsweise ein (hochpermeables) ferromagnetisches Material, um vorhandene Magnetfelder zu verstärken und die Empfindlichkeit der Spulenanordnung als Messspule zu erhöhen.

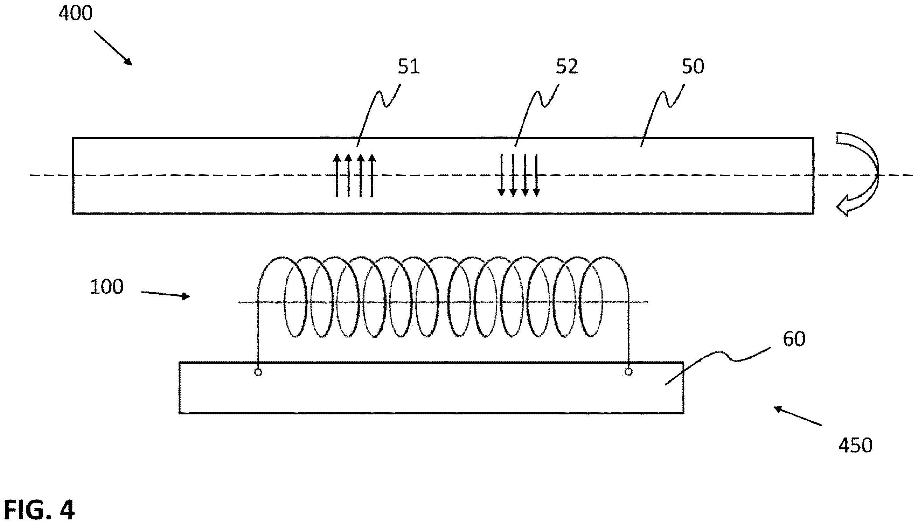

Figur 4 zeigt eine Ausführungsform der erfindungsgemäßen Messvorrichtung 450 und eine Ausführungsform 400 des erfindungsgemäßen Drehmomentsensors.

Die erfindungsgemäße Messvorrichtung 450 umfasst in diesem Beispiel eine erfindungsgemäße Spulenanordnung 300, sowie ein Wechselspannungsmodul 60 zur Erzeugung einer Wechselspannung. An die Spulenanordnung 100 (200, 300) kann eine Wechselspannung angelegt werden, indem voneinander abgewandte Enden der ersten und zweiten Zylinderspule elektrisch mit dem Wechselspannungsmodul 60 verbunden sind.

Die Messvorrichtung 450 kann zur Erfassung eines Magnetfelds vorgesehen sein. Dabei kann die angelegte Wechselspannung größer als 1 kHz sein, vorzugsweise im Bereich von 1 kHz bis 1 GHz, und höchst vorzugsweise im Bereich von 10 kHz bis 1 GHz liegen.

Ein Schwingkreis der Messvorrichtung 450 wird durch das Magnetfeld an der Spulenanordnung beeinflusst, so dass eine Messung des Feldes erfolgen kann.

Der erfindungsgemäße Drehmomentsensor 400 umfasst eine magnetisierte Welle 50 mit in Umfangrichtung gegenläufig magnetisierten Bereichen 51, 52, wobei an die Welle 50 ein Drehmoment angelegt werden kann, wobei ein in Abhängigkeit vom anliegenden Drehmoment veränderliches Magnetfeld außerhalb der Welle 50 erzeugt wird; sowie die erfindungsgemäße Messvorrichtung 450 zur Erfassung des erzeugten Magnetfelds.

In einer Alternative kann statt der magnetisierten Welle 50 eine magnetisierte Scheibe mit unterschiedlichen Magnetisierungsrichtungen eingesetzt werden, wie beispielweise in der Europäischen Patentanmeldung Nr. 21 183 622.6 beschrieben.

Der erfindungsgemäße Drehmomentsensor 400 kann beispielsweise in einem Fahrzeug, beispielsweise einem E-Bike, insbesondere einem Tretlager darin, oder einer Robotikvorrichtung eingesetzt werden.

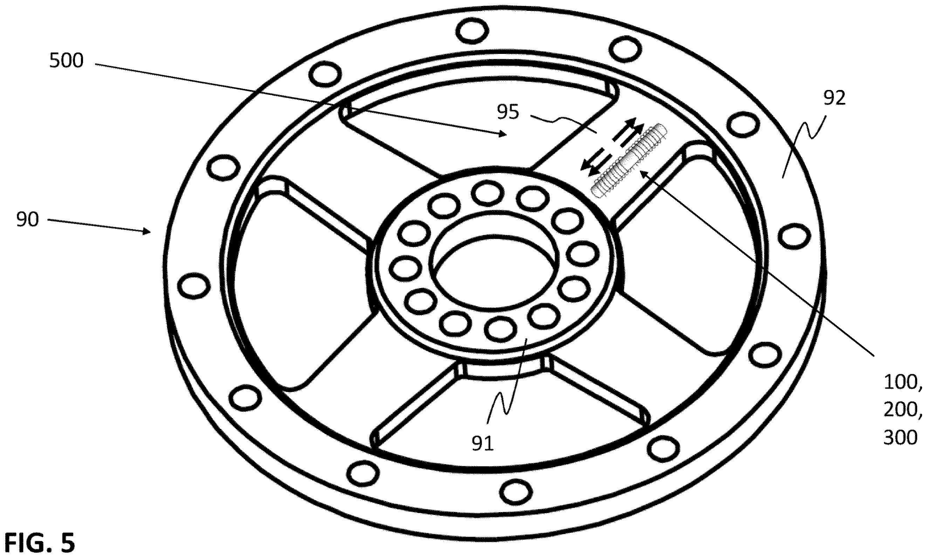

Figur 5 zeigt eine weitere Ausführungsform eines erfindungsgemäßen Drehmomentsensors 500.

In dieser Ausführungsform des Drehmomentsensors 500 ist eine Speiche 95 eines Speichenrads 90 magnetisiert, in diesem Beispiel innerhalb von zwei radial versetzten Bereichen der Speiche 95, und darin jeweils in entgegengesetzte radiale Richtungen magnetisiert. Das Speichenrad 90 kann im Wesentlichen in Form einer Scheibe ausgebildet sein. An dem Speichenrad 90 kann zwischen einem Innenbereich 91 des Speichenrads 90 zu einem Außenbereich 92 des Speichenrads 90 mittels daran befestigbaren kraftübertragenden Elementen ein Drehmoment anliegen. Dieses Drehmoment bewirkt eine Magnetfeldänderung.

Der Drehmomentsensor 500 umfasst weiterhin eine Messvorrichtung zur Erfassung des geänderten Magnetfelds mit einer Spulenanordnung 300, die an den magnetisierten radialen Bereichen der Speiche 95 vorgesehen ist, wobei die Spulenanordnung 300 gemäß der zuvor beschriebenen erfindungsgemäßen Ausführungsform ausgebildet sein kann.

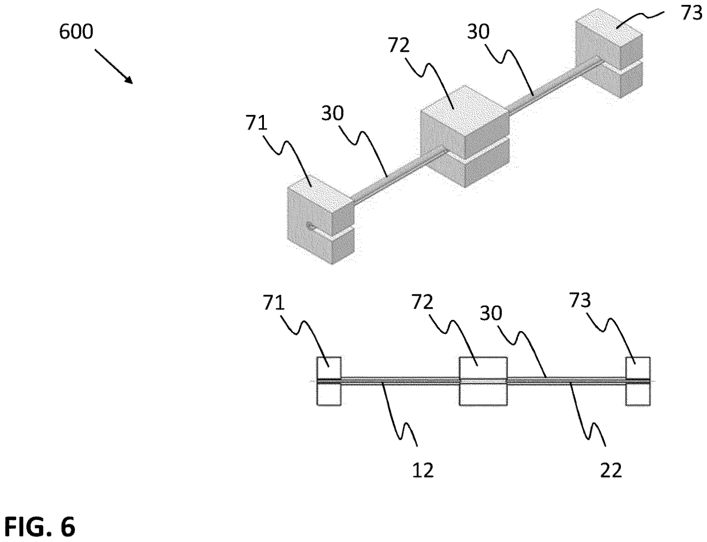

Figur 6 zeigt einen Wickelkörper 600 zum Herstellen einer erfindungsgemäßen Spulenanordnung.

Eine Möglichkeit, die eine erfindungsgemäße Spulenanordnung bereitzustellen, besteht darin, einen Spulenwickel aus einem Wickeldraht mit einem ersten Teilspulenwickel als erste Zylinderspule und einem zweiten Teilspulenwickel als zweite Zylinderspule herzustellen, wobei der erste Teilspulenwickel die erste Windungsrichtung aufweist und der zweite Teilspulenwickel die zweite Windungsrichtung aufweist. Auf diese Weise kann die Spulenanordnung durch Wickel eines Wickeldrahtes (z.B. Kupferlackdraht) ausgebildet werden. Dabei ändert sich lediglich die Wickelrichtung in einem Übergangsbereich zwischen dem ersten und dem zweiten Teilspulenwickel.

Der Spulenwickel kann auf dem in Figur 6 gezeigten Wickelkörper 600 zum Wickeln des Wickeldrahts aufgewickelt werden. Der Wickelkörper 600 umfasst auch das Stabilisierungselement 30 mit den ferromagnetischen Kernen 12, 22.

Der Wickelkörper 600 umfasst weiterhin Positionierungselemente 71, 72, 73 zum Positionieren der Spulenanordnung. Mit Hilfe der Positionierungselemente 71, 72, 73 kann eine Länge des Spulenwickels bzw. eine Position des ersten und zweiten Teilspulenwickels definiert werden, indem ein Wickeln des ersten Teilspulenwickels im Bereich zwischen den Positionierungselementen 71 und 72 in einer ersten Wickelrichtung (links- oder rechtsdrehend) erfolgt, und des zweiten Teilspulenwickels zwischen den Positionierungselementen 72 und 73 in einer zweiten Wickelrichtung (rechts- bzw. linksdrehend) erfolgt, die entgegen der ersten Wickelrichtung ist. Im Übergangsbereich mit dem Positionierungselement 72 erfolgt ein gerades Durchführen des Wickeldrahtes. Der Wickeldraht kann aus den Endbereichen mit den Positionierungselementen 71, 73 hervorstehen, so dass diese als Kontaktstellen zum Anschließen an eine Messschaltung dienen können.

Weiterhin kann die fertige Spulenanordnung mit den Positionierungselementen 71, 72, 73 in einem vorgesehenen Messbereich einer Vorrichtung befestigt / positioniert werden, beispielsweise auf einer Platine oder an einem Gehäuse einer Messvorrichtung.

Das erfindungsgemäße Verfahren umfasst in diesem Beispiel ein Wickeln eines Wickeldrahts zur Herstellung eines Spulenwickels mit einem ersten Teilspulenwickel als die erste Zylinderspule und einem zweiten Teilspulenwickel als die zweite Zylinderspule, wobei der erste Teilspulenwickel mit einer ersten Windungsrichtung gewickelt wird und der zweite Teilspulenwickel mit einer zweiten Windungsrichtung gewickelt wird, wobei das Wickeln mit der zweite Windungsrichtung gegenläufig zum Wickeln mit der ersten Windungsrichtung erfolgt.

Weiterhin ist in dieser Ausführungsform ein Einbetten eines ersten und eines zweiten Spulenkerns 12, 22 in den Stabilisierungskörper 30 vorgesehen. Erfindungsgemäß befindet sich der erste Spulenkern 12 wenigstens teilweise innerhalb des ersten Teilspulenwickels und der zweite Spulenkern 22 wenigstens teilweise innerhalb des zweiten Teilspulenwickels.

Der Stabilisierungskörper 30 kann beispielsweise eine Längsnut aufweisen, in welche der erste und der zweite ferromagnetische Spulenkern 12, 22 eingebettet sind, oder der erste und der zweite ferromagnetische Spulenkern 12, 22 können vollständig vom Material des Stabilisierungskörpers umschlossen eingebettet sein, insbesondere darin eingegossen sein.

Die dargestellten Ausführungsformen sind lediglich beispielhaft und der vollständige Umfang der vorliegenden Erfindung wird durch die Ansprüche definiert.

## Patentansprüche

1. Spulenanordnung (300), insbesondere Messspulenanordnung zur Erfassung eines Magnetfelds, umfassend:
eine erste Zylinderspule (10) mit einer ersten Windungsrichtung;
eine zweite Zylinderspule (20) mit einer zweiten Windungsrichtung;
wobei die erste und die zweite Zylinderspule längsweise hintereinander auf einer gemeinsamen Achse ausgerichtet angeordnet sind;
wobei zueinander benachbarte Enden (15) der ersten und zweiten Zylinderspule elektrisch miteinander verbunden sind; und
wobei die zweite Windungsrichtung gegenläufig zur ersten Windungsrichtung ist;
**dadurch gekennzeichnet, dass**
die erste Zylinderspule (10) mit einem ersten ferromagnetischen Spulenkern (12) und die zweite Zylinderspule (20) mit einem zweiten ferromagnetischen Spulenkern (22) versehen sind, wobei der erste und der zweite Spulenkern längsweise hintereinander und mit einem Abstand zueinander auf der gemeinsamen Achse ausgerichtet angeordnet sind, und wobei sich der erste Spulenkern (12) wenigstens teilweise innerhalb der ersten Zylinderspule (10) und sich der zweite Spulenkern (22) wenigstens teilweise innerhalb der zweiten Zylinderspule (20) befindet.

2. Spulenanordnung nach Anspruch 1, weiterhin umfassend einen Stabilisierungskörper (30) zur Stabilisierung der Ausrichtung der ersten und zweiten Zylinderspule zueinander auf der gemeinsamen Achse, wobei der Stabilisierungskörper vorzugsweise aus Kunststoffmaterial gefertigt ist, und wobei der Stabilisierungskörper vorzugsweise einen konstanten Querschnitt über dessen Länge aufweist.

3. Spulenanordnung nach Anspruch 2, wobei der erste ferromagnetische Spulenkern und der zweite ferromagnetische Spulenkern im Stabilisierungskörper eingebettet sind, wobei der Stabilisierungskörper vorzugsweise eine Längsnut aufweist, in welche der erste und der zweite ferromagnetische Spulenkern eingebettet sind, oder wobei der erste und der zweite ferromagnetische Spulenkern vorzugsweise vollständig vom Material des Stabilisierungskörpers umschlossen eingebettet sind.

4. Spulenanordnung nach Anspruch 2 oder 3, wobei der erste und der zweite ferromagnetische Spulenkern aus gleichem Material gefertigt und/oder gleich geformt sind.

5. Spulenanordnung nach einem der Ansprüche 1 bis 4, wobei eine erste Windungszahl der ersten Zylinderspule gleich einer zweiten Windungszahl der zweiten Zylinderspule ist; und/oder wobei ein erster Windungsdurchmesser der ersten Zylinderspule gleich einem zweiten Windungsdurchmesser der zweiten Zylinderspule ist; und/oder wobei eine erste Länge der ersten Zylinderspule gleich einer zweiten Länge der zweiten Zylinderspule ist und/oder wobei eine Induktivität der ersten Zylinderspule und eine Induktivität der zweiten Zylinderspule gleich ist.

6. Spulenanordnung nach einem der Ansprüche 1 bis 5, wobei die erste Windungsrichtung rechtsläufig und die zweite Windungsrichtung linksläufig ist, oder wobei die erste Windungsrichtung linksläufig und die zweite Windungsrichtung rechtsläufig ist.

7. Spulenanordnung nach einem der Ansprüche 1 bis 8, wobei die Spulenanordnung einen Spulenwickel aus einem Wickeldraht mit einem ersten Teilspulenwickel als erste Zylinderspule und einem zweiten Teilspulenwickel als zweite Zylinderspule umfasst, wobei der erste Teilspulenwickel die erste Windungsrichtung aufweist und der zweite Teilspulenwickel die zweite Windungsrichtung aufweist.

8. Spulenanordnung nach Anspruch 7 in Kombination mit Anspruch 2, wobei der Spulenwickel auf dem Stabilisierungskörper als Wickelkörper zum Wickeln des Wickeldrahts aufgewickelt ist.

9. Messvorrichtung (450), umfassend:
eine Spulenanordnung (300) nach einem der Ansprüche 1 bis 8; und
ein Wechselspannungsmodul (60) zur Erzeugung einer Wechselspannung;
wobei an die Spulenanordnung eine Wechselspannung anlegbar ist, indem voneinander abgewandte Enden der ersten und zweiten Zylinderspule elektrisch mit dem Wechselspannungsmodul verbunden sind.

10. Messvorrichtung nach Anspruch 9, wobei die Messvorrichtung zur Erfassung eines Magnetfelds vorgesehen ist.

11. Messvorrichtung nach Anspruch 9 oder 10, wobei die Wechselspannung größer als 1 kHz ist, vorzugsweise im Bereich von 1 kHz bis 1 GHz, und höchst vorzugsweise im Bereich von 10 kHz bis 1 GHz liegt.

12. Drehmomentsensor (400, 500), umfassend:
eine magnetisierte Welle (50), eine magnetisierte Scheibe oder eine magnetisierte Speiche (95) eines Speichenrads (90), an die ein Drehmoment anlegbar ist, wobei ein in Abhängigkeit vom anliegenden Drehmoment veränderliches Magnetfeld außerhalb der Welle, der Scheibe bzw. der Speiche erzeugbar ist; und
eine Messvorrichtung (450) nach einem der Ansprüche 9 bis 11 zur Erfassung des erzeugten Magnetfelds.

13. Vorrichtung, umfassend:
einen Drehmomentsensor (400, 500) nach Anspruch 12;
wobei die Vorrichtung insbesondere ausgewählt ist aus der Gruppe, die ein Fahrzeug, eine Robotikvorrichtung, ein Tretlager, ein E-Bike umfasst.

14. Verfahren zur Herstellung einer Spulenanordnung, umfassend:
Bereitstellen einer ersten Zylinderspule (10) mit einer ersten Windungsrichtung und einer zweiten Zylinderspule (20) mit einer zweiten Windungsrichtung, die längsweise hintereinander auf einer gemeinsamen Achse ausgerichtet sind;
wobei auf der gemeinsamen Achse zueinander benachbarte Enden der ersten und zweiten Zylinderspule elektrisch miteinander verbunden sind; und wobei die zweite Windungsrichtung gegenläufig zur ersten Windungsrichtung ist;
wobei das Bereitstellen der ersten und zweiten Zylinderspule umfasst:
(i) Wickeln eines Wickeldrahts zur Herstellung eines Spulenwickels mit einem ersten Teilspulenwickel als die erste Zylinderspule (10) und einem zweiten Teilspulenwickel als die zweite Zylinderspule (20), wobei der erste Teilspulenwickel mit einer ersten Windungsrichtung gewickelt wird und der zweite Teilspulenwickel mit einer zweiten Windungsrichtung gewickelt wird, wobei das Wickeln mit der zweite Windungsrichtung gegenläufig zum Wickeln mit der ersten Windungsrichtung erfolgt; oder
(ii) Bereitstellen einer jeweils separaten ersten Zylinderspule (10) mit der ersten Windungsrichtung und einer zweiten Zylinderspule (20) mit der ersten Windungsrichtung; und elektrisches Verbinden von zueinander auf der gemeinsamen Achse benachbarten Enden der ersten und zweiten Zylinderspule;
**dadurch gekennzeichnet, dass**
die erste Zylinderspule (10) mit einem ersten ferromagnetischen Spulenkern (12) und die zweite Zylinderspule (20) mit einem zweiten ferromagnetischen Spulenkern (22) versehen werden, wobei der erste und der zweite Spulenkern längsweise hintereinander und mit einem Abstand zueinander auf der gemeinsamen Achse ausgerichtet angeordnet werden, und wobei sich der erste Spulenkern (12) wenigstens teilweise innerhalb der ersten Zylinderspule (10) und sich der zweite Spulenkern (22) wenigstens teilweise innerhalb der zweiten Zylinderspule (20) befindet.

15. Verfahren nach Anspruch 14, weiterhin umfassend:
Bereitstellen eines Stabilisierungskörpers (30) zur Stabilisierung der Ausrichtung der ersten und zweiten Zylinderspule zueinander auf der gemeinsamen Achse, insbesondere auch als Wickelkörper zum Wickeln des Wickeldrahts für Alternative (i); und
weiterhin für Alternative (i) ein Einbetten des ersten und des zweiten Spulenkerns in den Stabilisierungskörper.

## Claims

1. A coil arrangement (300), in particular a measuring coil arrangement for detecting a magnetic field, comprising:
a first cylindrical coil (10) with a first winding direction;
a second cylindrical coil (20) with a second winding direction;
wherein the first and second cylindrical coils are arranged longitudinally one behind the other aligned on a common axis;
wherein mutually adjacent ends (15) of the first and second solenoids are electrically connected to each other; and
wherein the second winding direction is opposed to the first winding direction;
**characterized in that**
the first cylindrical coil (10) is provided with a first ferromagnetic coil core (12) and the second cylindrical coil (20) is provided with a second ferromagnetic coil core (22), wherein the first and second coil cores are arranged longitudinally one behind the other and aligned spaced apart on the common axis, and wherein the first coil core (12) is at least partially within the first cylindrical coil (10) and the second coil core (22) is at least partially within the second cylindrical coil (20).

2. The coil arrangement of claim 1 further comprising a stabilizing body (30) for stabilizing the alignment of the first and second cylinder coils with respect to each other on the common axis, wherein the stabilizing body is preferably made of plastic material, and wherein the stabilizing body preferably has a constant cross-section along its length.

3. The coil arrangement of claim 2, the first ferromagnetic coil core and the second ferromagnetic coil core being embedded in the stabilizing body, the stabilizing body preferably having a longitudinal groove in which the first and second ferromagnetic coil cores are embedded, or the first and second ferromagnetic coil cores are preferably embedded completely enclosed by the material of the stabilizing body.

4. The coil arrangement of claim 2 or 3, wherein the first and second ferromagnetic coil cores are made of the same material and/or are formed the same.

5. The coil arrangement of any one of claims 1 to 4, a first number of turns of the first cylindrical coil being equal to a second number of turns of the second cylindrical coil; and/or a first winding diameter of the first cylindrical coil being equal to a second winding diameter of the second cylindrical coil; and/or a first length of the first cylindrical coil being equal to a second length of the second cylindrical coil; and/or wherein an inductance of the first cylindrical coil and an inductance of the second cylindrical coil are equal.

6. The coil arrangement of any one of claims 1 to 5, wherein the first winding direction is clockwise and the second winding direction is counterclockwise, or wherein the first winding direction is counterclockwise and the second winding direction is clockwise.

7. The coil arrangement of any one of claims 1 to 6, said coil arrangement comprising a coil winding of a winding wire having a first sub-coil winding as a first cylindrical coil and a second sub-coil winding as a second cylindrical coil, wherein the first sub-coil winding has the first winding direction and the second sub-coil winding has the second winding direction.

8. The coil arrangement of claim 7 in combination with claim 2, wherein the coil winding is wound on the stabilizing body as a winding body for winding the winding wire.

9. A measuring device (450) comprising:
a coil arrangement (300) of any one of claims 1 to 8; and
an AC voltage module (60) for generating an AC voltage;
wherein an AC voltage can be applied to the coil arrangement by electrically connecting opposite ends of the first and second cylindrical coils to the AC voltage module.

10. The measuring device of claim 9, wherein the measuring device is provided for detecting a magnetic field.

11. The measuring device of claim 9 or 10, wherein the AC voltage is greater than 1 kHz, preferably in the range of 1 kHz to 1 GHz, and most preferably in the range of 10 kHz to 1 GHz.

12. A torque sensor (400, 500), comprising:
a magnetized shaft (50), a magnetized disk or a magnetized spoke (95) of a spoke wheel (90) to which a torque can be applied, wherein a magnetic field which varies as a function of the applied torque can be generated outside the shaft, the disk or the spoke; and
a measuring device (450) according to any one of claims 9 to 11 for detecting the generated magnetic field.

13. A device comprising:
a torque sensor (400, 500) of claim 12;
wherein the device is in particular selected from the group comprising a vehicle,
a robotic device, a bottom bracket, an e-bike.

14. A method of manufacturing a coil arrangement comprising:
providing a first cylindrical coil (10) having a first winding direction and a second cylindrical coil (20) having a second winding direction longitudinally aligned in series on a common axis; wherein mutually adjacent ends of the first and second cylindrical coils are electrically connected to each other on the common axis; and
wherein the second winding direction is opposed to the first winding direction;
wherein providing the first and second cylindrical coils comprises:
(i) winding a winding wire to produce a coil winding having a first sub-coil winding as the first cylindrical coil (10) and a second sub-coil winding as the second cylindrical coil (20), the first sub-coil winding being wound with a first winding direction and the second sub-coil winding being wound with a second winding direction, the winding with the second winding direction being opposed to the winding with the first winding direction; or
(ii) providing a respective separate first cylindrical coil (10) having said first winding direction and a second cylindrical coil (20) having said first winding direction; and electrically connecting ends of said first and second cylindrical coils adjacent to each other on said common axis;
**characterized in that**
the first cylindrical coil (10) is provided with a first ferromagnetic coil core (12) and
the second cylindrical coil (20) is provided with a second ferromagnetic coil core (22), wherein the first and second coil cores are arranged longitudinally one behind the other and aligned spaced apart on the common axis, and wherein the first coil core (12) is at least partially within the first cylindrical coil (10) and the second coil core (22) is at least partially within the second cylindrical coil (20).

15. The method of claim 14, further comprising:
providing a stabilizing body (30) for stabilizing the alignment of the first and
second cylindrical coils with respect to each other on the common axis, in particular also as a winding body for winding the winding wire for alternative (i); and
further, for alternative (i), embedding the first coil core and the second coil core within the stabilizing body.

## Revendications

1. Agencement de bobine (300), en particulier agencement de bobine de mesure permettant de détecter un champ magnétique, comprenant :
une première bobine cylindrique (10) présentant un premier sens d'enroulement ;
une seconde bobine cylindrique (20) présentant un second sens d'enroulement ;
dans lequel les première et seconde bobines cylindriques sont agencées de manière alignée longitudinalement l'une derrière l'autre sur un axe commun ;
dans lequel des extrémités (15) adjacentes des première et seconde bobines cylindriques sont reliées électriquement l'une à l'autre ; et
dans lequel le second sens d'enroulement est en sens inverse par rapport au premier sens d'enroulement ;
**caractérisé en ce que**
la première bobine cylindrique (10) est munie d'un premier noyau de bobine ferromagnétique (12) et la seconde bobine cylindrique (20) est munie d'un second noyau de bobine ferromagnétique (22), dans lequel les premier et second noyaux de bobine sont agencés de manière alignée longitudinalement l'un derrière l'autre et à une certaine distance l'un de l'autre sur l'axe commun, et dans lequel le premier noyau de bobine (12) se trouve au moins partiellement à l'intérieur de la première bobine cylindrique (10) et le second noyau de bobine (22) se trouve au moins partiellement à l'intérieur de la seconde bobine cylindrique (20).

2. Agencement de bobine selon la revendication 1, comprenant en outre un corps de stabilisation (30) permettant de stabiliser l'alignement des première et seconde bobines cylindriques l'une par rapport à l'autre sur l'axe commun, dans lequel le corps de stabilisation est fabriqué de manière préférée en matière plastique, et dans lequel le corps de stabilisation présente de manière préférée une section transversale constante sur sa longueur.

3. Agencement de bobine selon la revendication 2, dans lequel le premier noyau de bobine ferromagnétique et le second noyau de bobine ferromagnétique sont encastrés dans le corps de stabilisation, dans lequel le corps de stabilisation présente de manière préférée une rainure longitudinale au sein de laquelle sont encastrés les premier et second noyaux de bobine ferromagnétique, ou dans lequel les premier et second noyaux de bobine ferromagnétique sont encastrés en étant de manière préférée complètement entourés par le matériau du corps de stabilisation.

4. Agencement de bobine selon la revendication 2 ou 3, dans lequel les premier et second noyaux de bobines ferromagnétiques sont fabriqués dans le même matériau et/ou sont formés de manière identique.

5. Agencement de bobine selon l'une quelconque des revendications 1 à 4, dans lequel un premier nombre de spires de la première bobine cylindrique est égal à un second nombre de spires de la seconde bobine cylindrique ; et/ou dans lequel un premier diamètre de spires de la première bobine cylindrique est égal à un second diamètre de spires de la seconde bobine cylindrique ; et/ou dans lequel une première longueur de la première bobine cylindrique est égale à une seconde longueur de la seconde bobine cylindrique et/ou dans lequel une inductance de la première bobine cylindrique et une inductance de la seconde bobine cylindrique sont égales.

6. Agencement de bobines selon l'une quelconque des revendications 1 à 5, dans lequel le premier sens d'enroulement est dans le sens des aiguilles d'une montre et le second sens d'enroulement est dans le sens inverse des aiguilles d'une montre, ou dans lequel le premier sens d'enroulement est dans le sens inverse des aiguilles d'une montre et le second sens d'enroulement est dans le sens des aiguilles d'une montre.

7. Agencement de bobine selon l'une quelconque des revendications 1 à 8, dans lequel l'agencement de bobine comprend un bobinage constitué d'un fil d'enroulement avec un premier sous-bobinage faisant office de première bobine cylindrique et un second sous-bobinage faisant office de seconde bobine cylindrique, dans lequel le premier sous-bobinage présente le premier sens d'enroulement et le second sous-bobinage présente le second sens d'enroulement.

8. Agencement de bobine selon la revendication 7 en combinaison avec la revendication 2, dans lequel le bobinage est enroulé sur le corps de stabilisation faisant office de corps d'enroulement permettant d'enrouler le fil d'enroulement.

9. Dispositif de mesure (450), comprenant :
un agencement de bobine (300) selon l'une quelconque des revendications 1 à 8 ; et un module de tension alternative (60) permettant de générer une tension alternative ;
dans lequel une tension alternative peut être appliquée à l'agencement de bobine en reliant électriquement des extrémités opposées des première et seconde bobines cylindriques au module de tension alternative.

10. Dispositif de mesure selon la revendication 9, dans lequel le dispositif de mesure est prévu pour détecter un champ magnétique.

11. Dispositif de mesure selon la revendication 9 ou 10, dans lequel la tension alternative est supérieure à 1 kHz, de manière préférée se situe dans la plage comprise entre 1 kHz et 1 GHz, et de manière très préférée se situe dans la plage comprise entre 10 kHz et 1 GHz.

12. Capteur de couple (400, 500), comprenant :
un arbre magnétisé (50), un disque magnétisé ou un rayon magnétisé (95) d'une roue à rayons (90), au niveau duquel un couple peut être appliqué, dans lequel un champ magnétique variable en fonction du couple appliqué peut être généré à l'extérieur de l'arbre, du disque ou du rayon ; et
un dispositif de mesure (450) selon l'une quelconque des revendications 9 à 11 permettant de détecter le champ magnétique généré.

13. Dispositif comprenant :
un capteur de couple (400, 500) selon la revendication 12 ;
dans lequel le dispositif est en particulier choisi dans le groupe comprenant un véhicule, un dispositif robotique, un pédalier, un vélo électrique.

14. Procédé de production d'un agencement de bobine, comprenant les étapes consistant à :
fournir une première bobine cylindrique (10) présentant un premier sens d'enroulement et une seconde bobine cylindrique (20) présentant un second sens d'enroulement, qui sont alignées longitudinalement l'une derrière l'autre sur un axe commun ; dans lequel des extrémités, adjacentes l'une à l'autre sur l'axe commun, des première et seconde bobines cylindriques sont reliées électriquement l'une à l'autre ; et dans lequel le second sens d'enroulement est en sens inverse du premier sens d'enroulement ;
dans lequel la fourniture des première et seconde bobines cylindriques comprend les étapes consistant à :
(i) enrouler un fil d'enroulement pour produire un bobinage présentant un premier sous-bobinage faisant office de première bobine cylindrique (10) et un second sous-bobinage faisant office de seconde bobine cylindrique (20), dans lequel le premier sous-bobinage est enroulé avec un premier sens d'enroulement et le second sous-bobinage est enroulé avec un second sens d'enroulement, dans lequel l'enroulement dans le second sens d'enroulement est effectué en sens inverse de l'enroulement dans le premier sens d'enroulement ; ou
(ii) fournir une première bobine cylindrique (10) respectivement séparée présentant le premier sens d'enroulement et une seconde bobine cylindrique (20) présentant le premier sens d'enroulement, et relier électriquement des extrémités, adjacentes l'une à l'autre sur l'axe commun, des première et seconde bobines cylindriques ;
**caractérisé en ce que**
la première bobine cylindrique (10) est munie d'un premier noyau de bobine ferromagnétique (12) et la seconde bobine cylindrique (20) est munie d'un second noyau de bobine ferromagnétique (22), dans lequel les premier et second noyaux de bobine sont agencés de manière alignée longitudinalement l'un derrière l'autre et à une certaine distance l'un de l'autre sur l'axe commun, et dans lequel le premier noyau de bobine (12) se trouve au moins partiellement à l'intérieur de la première bobine cylindrique (10) et le second noyau de bobine (22) se trouve au moins partiellement à l'intérieur de la seconde bobine cylindrique (20).

15. Procédé selon la revendication 14, comprenant en outre l'étape consistant à :
fournir un corps de stabilisation (30) permettant de stabiliser l'alignement des première et seconde bobines cylindrique l'une par rapport à l'autre sur l'axe commun et faisant en particulier aussi office de corps d'enroulement permettant d'enrouler le fil d'enroulement pour la variante (i) ; et
en outre pour la variante (i), encastrer les premier et second noyaux de bobine dans le corps de stabilisation.
